# EUROPEAN PATENT APPLICATION

(11) **EP 4 596 231 A1**
(43) Date of publication of application: **06.08.2025**
(21) Application number: 24382096.6
(22) Date of filing: 31.01.2024
(51) Int. Cl.: B32B 7/12, B32B 27/08, B32B 27/30, B32B 27/32, B32B 27/34, B32B 27/40, C08L 23/12, C08L 51/06, C09J 151/06

(54) **TIE LAYERS COMPRISING CRYSTALLINE BLOCK COMPOSITE COMPONENTS AND FUNCTIONALIZED POLYETHYLENE AND MULTILAYER FILMS INCORPORATING SAME**

(71) Applicant: Dow Global Technologies LLC, Midland, MI 48674 (US)
(72) Inventor: DONG, Yifan, Lake Jackson, 77566 (US); HU, Yushan, Lake Jackson, 77566 (US); MARKS, Scott B., Wilmington, 19803 (US); JIN, Lin, Lake Jackson, 77566 (US); MAKSIMOVIC, Ksenija, 43006 Tarragona (ES)
(74) Representative: Elzaburu S.L.P.

(57) **Abstract**

A multilayer film includes first and second outer layers including polypropylene, a core layer including at least one polar polymer disposed between the first outer layer and the second outer layer, a first tie layer disposed between the first outer layer and the core layer, and a second tie layer disposed between the first outer layer and the core layer, wherein the first tie layer, the second tie layer, or both include a crystalline block composite (CBC) component including an ethylene polymer (EP), an alpha-olefin-based crystalline polymer (CAOP) and a block copolymer including an ethylene polymer block and a crystalline alpha-olefin block (CAOB), functionalized polyethylene, wherein the functionalized polyethylene comprises polyethylene grafted with ethylenically unsubstituted dicarboxylic acid or derivative thereof; and at least one of a polyolefin elastomer, an ethylene propylene diene terpolymer, or an olefin block copolymer.

## Description

### TECHNICAL FIELD

The present disclosure generally relates to tie layers effective at higher temperatures and specifically relate to multilayer films that utilizes these tie layers to maintain adhesion between a polypropylene layer and a polar core layer at higher temperatures.

### BACKGROUND

Specialty multilayer films serve multiple applications and market segments across the food, specialty packaging, infrastructure, and transportation industries. These multilayer films may include tie layers to adhere dissimilar layers, for example, polyolefin layers and polar barrier layer such as EVOH or polyamide, within the multilayer film. The tie layers strongly adhere to the layers on each side of the tie layer, thus helping bind together those layers in the multilayer film.

However, conventional tie layers are often unable to withstand high temperatures (i.e. temperatures greater than 100 °C), which may result in poor adhesion and delamination of the film. Therefore, a need exists for improved tie layers that resist delamination at high temperatures.

### SUMMARY

Conventional polypropylene tie resin formulations typically include a polypropylene-based matrix resin for diffusion to the adjacent polypropylene layer, a maleic anhydride-grafted polypropylene for chemical reaction with EVOH or nylon, and additional modifiers such as polyolefin elastomers for elasticity and enhanced adhesion peel strength.

However, challenges for making polypropylene tie layers remain in the maleic anhydride grafting process, where polypropylene undergoes chain scission during the melt graft process, and the grafting reaction tend to happen on shorter oligomers rather than the polymer backbone. This renders the grafted polypropylene less effective when it is formulated into a tie resin for bonding to a barrier layer such as EVOH or nylon, leading to lower adhesion, delamination, and loss of packaging integration during storage or heat processing such as retort cooking.

Embodiments of the present disclosure address these and other issues by utilizing a tie layer comprising a crystalline block composite (CBC) component and a functionalized polyethylene that delivers superior adhesion enhancement at higher temperatures to multilayer films. The crystalline block composite (CBC) component and a functionalized polyethylene will not only deliver enhanced solid handling during pellet transportation, but also provide improved heat resistance for high-temperature applications such as retort packages. Some embodiments of the present disclosure may be suitable for high temperature applications up to 120 °C.

In one embodiment, a multilayer film includes first and second outer layers comprising polypropylene, a core layer including at least one polar polymer disposed between the first outer layer and the second outer layer, a first tie layer disposed between the first outer layer and the core layer, and a second tie layer disposed between the second outer layer and the core layer, wherein the first tie layer, the second tie layer, or both include a crystalline block composite (CBC) component. The CBC component may include (i) an ethylene polymer (EP) comprising at least 90 mol % polymerized ethylene by weight of the ethylene polymer, (ii) an alpha-olefin-based crystalline polymer (CAOP), and (iii) a block copolymer. The block copolymer may include (a) an ethylene polymer block comprising at least 90 mol % polymerized ethylene by weight of the ethylene polymer block and (b) a crystalline alpha-olefin block (CAOB). The first tie layer, the second tie layer, or both may further include functionalized polyethylene having a density of 0.900 to 0.940 g/cm³ and a melt flow rate of 1.0 to 10.0 dg/min as determined according to ASTM D1238 (190 °C/ 2.16 kg), wherein the functionalized polyethylene comprises polyethylene grafted with ethylenically unsubstituted dicarboxylic acid or derivative thereof. The first tie layer, the second tie layer, or both may also further include at least one of a polyolefin elastomer, an ethylene propylene diene terpolymer, or an olefin block copolymer.

According to one or more embodiments of the present disclosure, an article may be produced from the above multilayer films.

According to one or more embodiments of the present disclosure, a tie layer formulation may include a crystalline block composite (CBC) component. The CBC component may include (i) an ethylene polymer (EP) comprising at least 90 mol % polymerized ethylene by weight of the ethylene polymer, (ii) an alpha-olefin-based crystalline polymer (CAOP), and (iii) a block copolymer. The block copolymer may include (a) an ethylene polymer block comprising at least 90 mol % polymerized ethylene by weight of the ethylene polymer block and (b) a crystalline alpha-olefin block (CAOB). The formulation may further include functionalized polyethylene having a density of 0.900 to 0.940 g/cm³ and a melt flow rate of 1.0 to 10.0 dg/min as determined according to ASTM D1238 (190 °C/ 2.16 kg), wherein the functionalized polyethylene comprises polyethylene grafted with ethylenically unsubstituted dicarboxylic acid or derivative thereof. The formulation may also further include at least one of a polyolefin elastomer, an ethylene propylene diene terpolymer, or an olefin block copolymer.

Additional features and advantages will be set forth in the detailed description that follows and, in part, will be readily apparent to those skilled in the art from that description or recognized by practicing the embodiments described herein, including the detailed description which follows in addition to the claims.

It is to be understood that both the foregoing general description and the following detailed description describe various embodiments and are intended to provide an overview or framework for understanding the nature and character of the claimed subject matter.

### DETAILED DESCRIPTION

### DEFINITIONS

"Multilayer film" refers to any structure having more than one layer. For example, the multilayer film may have three or more layers, such as 4, 5, 6, 7, 8, 9, 10, 11, 12, 13, 14, 15, 33, 55 or more layers.

As used in this disclosure, the term "polymer" may refer to a polymeric compound prepared by polymerizing monomers, whether of the same or a different type. The generic term polymer thus embraces the term "homopolymer," usually employed to refer to polymers prepared from only one type of monomer as well as "copolymer," which refers to polymers prepared from two or more different monomers. The term "interpolymer," as used herein, refers to a polymer prepared by the polymerization of at least two different types of monomers. The generic term interpolymer thus includes copolymers, and polymers prepared from more than two different types of monomers, such as terpolymers.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

"Polyolefin", "polyolefin polymer", "polyolefin resin" and like terms mean a polymer produced from a simple olefin (also called an alkene with the general formula CₙH₂ₙ) as a monomer. Polyethylene is produced by polymerizing ethylene with or without one or more comonomers, polypropylene by polymerizing propylene with or without one or more comonomers, etc. Thus, polyolefins include interpolymers such as ethylene/α-olefin copolymers, propylene/α-olefin copolymers, etc.

As used in this disclosure, the term "polyethylene" or "ethylene-based polymer" may refer to polymers comprising greater than 50% by mole of units, which have been derived from ethylene monomer. This includes polyethylene homopolymers or copolymers (meaning units derived from two or more comonomers). Common forms of ethylene-based polymer known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

As used in this disclosure, the term "polypropylene" or "polypropylene-based polymer" may refer to polymers comprising greater than 50% by mole of units, which have been derived from propylene monomer. This includes polypropylene homopolymers or copolymers (meaning units derived from two or more comonomers).

The term "crystalline" refers to a polymer or polymer block that possesses a first order transition or crystalline melting point (Tm) as determined by differential scanning calorimetry (DSC) or equivalent technique. The term may be used interchangeably with the term "semicrystalline".

The term "block copolymer" or "segmented copolymer" refers to a polymer comprising two or more chemically distinct regions or segments (referred to as "blocks") joined in a linear manner, that is, a polymer comprising chemically differentiated units which are joined (covalently bonded) end-to-end with respect to polymerized functionality, rather than in pendent or grafted fashion. The blocks may differ in the amount or type of comonomer incorporated therein, the density, the amount of crystallinity, the type of crystallinity (e.g. polyethylene versus polypropylene), the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The block copolymers of the present disclosure may be characterized by unique distributions of both polymer polydispersity (PDI or Mw/Mn) and block length distribution, due, in some embodiments, to the effect of a shuttling agent(s) in combination with the catalyst(s).

The term "crystalline block composite" (CBC) (including the term "crystalline block copolymer composite") refers to a composite comprising three parts: a crystalline ethylene based polymer (CEP), a crystalline alpha-olefin based polymer (CAOP), and a block copolymer having a crystalline ethylene block (CEB) and a crystalline alpha-olefin block (CAOB), wherein the CEB of the block copolymer is the same composition as the CEP in the block composite and the CAOB of the block copolymer is the same composition as the CAOP of the block composite. The three parts are present together as one component. Additionally, the compositional split between the amount of CEP and CAOP will be the same as that between the corresponding blocks in the block copolymer. The block copolymers can be linear or branched. More specifically, each of the respective block segments can contain long chain branches, but the block copolymer segment is substantially linear as opposed to containing grafted or branched blocks. When produced in a continuous process, the crystalline block composites desirably possess PDI from 1.7 to 15, from 1.8 to 10, from 1.8 to 5, or from 1.8 to 3.5. Such crystalline block composites are described in, for example, the following filed patent applications: PCT/US11/41189; U.S. Ser. No. 13/165,054; PCT/US11/41191; U.S. Ser. No. 13/165,073; PCT/US11/41194; and U.S. Ser. No. 13/165,096; all filed on 21 Jun. 2011 and incorporated herein by reference with respect to descriptions of the crystalline block composites, processes to make them and methods of analyzing them.

The term or "crystalline alpha-olefin block" "CAOB" refers to highly crystalline blocks of polymerized alpha olefin units in which the monomer is present in an amount greater than 90 mol %, greater than 93 mol percent, greater than 95 mol percent, or greater than 96 mol percent. In other words, the comonomer content in the CAOBs is less than 10 mol percent, less than 7 mol percent, less than 5 mol percent, or less than 4 mol %. CAOBs with propylene crystallinity have corresponding melting points that are 80° C, above 100° C, above 115° C, or above 120° C. In some embodiments, the CAOB comprise all or substantially all propylene units. CEB, on the other hand, refers to blocks of polymerized ethylene units in which the comonomer content is 10 mol % or less, such as between 0 mol % and 10 mol %, between 0 mol % and 7 mol %, or between 0 mol % and 5 mol %. Such CEB have corresponding melting points that are 75° C and above, such as 90° C and above, or 100° C and above.

"Hard" segments refer to highly crystalline blocks of polymerized units in which the monomer is present in an amount greater than 90 mol percent, greater than 93 mol percent, greater than 95 mol percent, or greater than 98 mol percent. In other words, the comonomer content in the hard segments is less than 2 mol percent, less than 5 mol percent, less than 7 mol percent, or less than 10 mol percent. In some embodiments, the hard segments comprise all or substantially all propylene units. "Soft" segments, on the other hand, refer to amorphous, substantially amorphous or elastomeric blocks of polymerized units in which the comonomer content is greater than 10 mol % and less than 90 mol %, greater than 20 mol % and less than 80 mol %, or greater than 33 mol % and less than 75 mol %.

The term "functionalized polyethylene" means a polyethylene incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups can be grafted to an ethylene homopolymer or an ethylene/α-olefin interpolymer, or it may be copolymerized with ethylene and an optional additional comonomer to form an interpolymer of ethylene, the functional comonomer and optionally other comonomer(s).

As used herein, the term "polyolefin" refers to any polymerized olefin, which can be linear, branched, cyclic, aliphatic, aromatic, substituted, or unsubstituted. Polyolefin includes olefin homopolymer and olefin copolymers. Specific examples include ethylene homopolymer, propylene homopolymer, butene homopolymer, ethylene alpha-olefin copolymers, and the like, propylene/alpha-olefin copolymer, butene/alpha-olefin copolymer and the like.

The term "LLDPE", includes both resins made using the traditional Ziegler-Natta catalyst systems and chromium-based catalyst systems as well as single-site catalysts, including, but not limited to, bis -metallocene catalysts (sometimes referred to as "m- LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, and U.S. Patent 5,582,923; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342). The LLDPEs can be made via gas-phase, solution-phase or slurry polymerization or any combination thereof, using any type of reactor or reactor configuration known in the art.

"Low density polyethylene" or "LDPE" refers polyethylene having a density from about 0.910 to 0.940 g/cm³ produced in radical polymerization reactions under high pressure such that branching occurs and non-linear polyethylene is formed.

"High density polyethylene" or "HDPE" refers to polyethylene having a density from about 0.940 usually to about 0.970 g/cm³.

The term "olefin block copolymer" refers to a copolymerized polymer of ethylene or propylene with α-olefins, wherein the copolymer comprises a plurality of repeating unit blocks or segments that are distinguishable from one another as they differ in at least one of their physical or chemical properties; for example, the content (mole fraction) of the repeating units derived from ethylene (or propylene) and the α-olefins, respectively, a degree of crystallization, a density, or a melting temperature.

The term "polar polymer" refers to a polymer formed from at least one monomer that comprises at least one heteroatom, such as oxygen (O), nitrogen (N), phosphorus (P) or sulfur (S).

### EMBODIMENTS

Reference will now be made in detail to embodiments of multilayer films including first and second outer layers comprising polypropylene, a core layer including at least one polar polymer disposed between the first outer layer and the second outer layer, a first tie layer disposed between the first outer layer and the core layer, and a second tie layer disposed between the first outer layer and the core layer, wherein the first tie layer, the second tie layer, or both include a crystalline block composite (CBC) component. The CBC component may include (i) an ethylene polymer (EP) comprising at least 90 mol. % polymerized ethylene by weight of the ethylene polymer, (ii) an alpha-olefin-based crystalline polymer (CAOP), and (iii) a block copolymer. The block copolymer may include (a) an ethylene polymer block comprising at least 90 mol. % polymerized ethylene by weight of the ethylene polymer block and (b) a crystalline alpha-olefin block (CAOB). The first tie layer, the second tie layer, or both may further include functionalized polyethylene having a density of 0.900 to 0.940 g/cm³ and a melt flow rate of 1.0 to 10.0 dg/min as determined according to ASTM D1238 (190 °C/ 2.16 kg), wherein the functionalized polyethylene comprises polyethylene grafted with ethylenically unsubstituted dicarboxylic acid or derivative thereof. The first tie layer, the second tie layer, or both may also further include at least one of a polyolefin elastomer, an ethylene propylene diene terpolymer, or an olefin block copolymer.

Various compositions are considered suitable for the CBC. In some embodiments, the CBC may include the CBC disclosed and described in United States Patent Nos. 9,511,567 and 10,526,436, the entire contents of which are hereby incorporated by reference.

The CBCs may be prepared by a process comprising contacting an addition polymerizable monomer or mixture of monomers under addition polymerization conditions with a composition including at least one addition polymerization catalyst, a cocatalyst and a chain shuttling agent, said process being characterized by formation of at least some of the growing polymer chains under differentiated process conditions in two or more reactors operating under steady state polymerization conditions or in two or more zones of a reactor operating under plug flow polymerization conditions. In some embodiments, the CBCs include a fraction of block polymer which possesses a most probable distribution of block lengths.

Suitable processes useful in producing the block composites and crystalline block composites may be found, for example, in U.S. Patent Application Publication No. 2008/0269412, published on Oct. 30, 2008, which is herein incorporated by reference in its entirety.

When producing a block polymer having a crystalline ethylene block (CEB) and a crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. The CEB may be produced in the first reactor or zone with fresh chain shuttling agent added. The presence of increased levels of ethylene in the reactor or zone producing CEB will typically lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system may be minimized There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. Another approach is to avoid additional unit operations and to utilize the much greater reactivity of ethylene versus higher alpha olefins such that the conversion of ethylene across the CEB reactor approaches 100%. The overall conversion of monomers across the reactors can be controlled by maintaining the alpha olefin conversion at a high level (90 to 95%).

Suitable catalysts and catalyst precursors for use in preparing CBCs include metal complexes such as disclosed in WO2005/090426, which is herein incorporated by reference in its entirety. Suitable catalysts are also disclosed in US 2006/0199930; US 2007/0167578; US 2008/0311812; U.S. Pat. No. 7,355,089 B2; or WO 2009/012215, which are herein incorporated by reference in their entirety.

The CBCs may include propylene, 1-butene or 4-methyl-1-pentene and one or more comonomers. The block polymers of the CBCs may include, in polymerized form, propylene and ethylene and/or one or more C₄₋₂₀ α-olefin comonomers, and/or one or more additional copolymerizable comonomers or the block polymers may include 4-methyl-1-pentene and ethylene and/or one or more C₄₋₂₀ α-olefin comonomers, or the block copolymers may include 1-butene and ethylene, propylene and/or one or more C₅-C₂₀ α-olefin comonomers and/or one or more additional copolymerizable comonomers. Additional suitable comonomers may be selected from diolefins, cyclic olefins, and cyclic diolefins, halogenated vinyl compounds, and vinylidene aromatic compounds.

Comonomer content in the resulting CBCs may be measured using any suitable technique, including techniques based on nuclear magnetic resonance (NMR) spectroscopy. Some or all of the polymer blocks may include amorphous or relatively amorphous polymers such as copolymers of propylene, 1-butene or 4-methyl-1-pentene and a comonomer, especially random copolymers of propylene, 1-butene or 4-methyl-1-pentene with ethylene, and any remaining polymer blocks (hard segments), if any, predominantly comprise propylene, 1-butene or 4-methyl-1-pentene in polymerized form. Such segments may be highly crystalline or stereospecific polypropylene, polybutene or poly-4-methyl-1-pentene, especially isotactic homopolymers.

The block copolymers of the CBCs may include from 10 to 90 weight percent crystalline or relatively hard segments and 90 to 10 weight percent amorphous or relatively amorphous segments (soft segments), such as from 20 to 80 weight percent crystalline or relatively hard segments and 80 to 20 weight percent amorphous or relatively amorphous segments (soft segments), or from 30 to 70 weight percent crystalline or relatively hard segments and 70 to 30 weight percent amorphous or relatively amorphous segments (soft segments). Within the soft segments, the mole percent comonomer may range from 10 to 90 mole percent, from 20 to 80 mole percent, or from 33 to 75 mol % percent. In the case wherein the comonomer is ethylene, the ethylene may be present in an amount of 10 mol % to 90 mol %, such as from 20 mol % to 80 mol %, or from 33 mol % to 75 mol % percent. The copolymers may include hard segments that are 90 mol % to 100 mol % propylene. The hard segments may be greater than 90 mol %, greater than 93 mol %, greater than 95 mol % propylene, or greater than 98 mol % propylene. Such hard segments have corresponding melting points that are 80° C, and above, 100° C and above, 115° C and above or 120° . and above.

The CBCs may have a Tm greater than 100° C, such as greater than 120° C, or greater than 125° C. The melt flow rate (MFR) (230 °C/ 2.16 kg) of the block composite may be from 0.1 to 1000 dg/min, such as from 0.1 to 50 dg/min, from 5.0 to 50.0 dg/min, from 5.0 to 40.0 dg/min, from 5.0 to 30.0 dg/min, from 5.0 to 20.0 dg/min, or from 5.0 to 10.0 dg/min as determined according to ASTM D1238. Without being bound by theory, it is believed that using CBCs with a Tm greater than 100 °C may improve adhesion performance and improved delamination resistance of the tie layers at high temperature (i.e. temperatures of at least 100 °C).

The block composite polymers may include ethylene, propylene, 1-butene or 4-methyl-1-pentene and optionally one or more comonomers in polymerized form. The block copolymers of the crystalline block composites may include, in polymerized form, ethylene, propylene, 1-butene, or 4-methyl-1-pentene and optionally one or more C₄₋₂₀ α-olefin comonomers. Additional suitable comonomers may be selected from diolefins, cyclic olefins, and cyclic diolefins, halogenated vinyl compounds, and vinylidene aromatic compounds.

Comonomer content in the resulting block composite polymers may be measured using any suitable technique, such as techniques based on nuclear magnetic resonance (NMR). Appropriate NMR techniques include those described in U.S. Patent Application Publication Nos US2011-0082257, US2011-0082258 and US2011-0082249, all published on April 7, 2011 the entireties of which are hereby incorporated by reference.

The crystalline block composite polymers may include from 0.5 to 95 wt % CEP, from 0.5 to 95 wt % CAOP and from 5 to 99 wt % block copolymer. The crystalline block composite polymers may include from 0.5 to 79 wt % CEP, from 0.5 to 79 wt % CAOP and from 20 to 99 wt % block copolymer, or from 0.5 to 49 wt % CEP, from 0.5 to 49 wt % CAOP and from 50 to 99 wt % block copolymer. Weight percents are based on total weight of crystalline block composite. The sum of the weight percents of CEP, CAOP, and block copolymer equals 100%.

The block copolymers of the CBC may include from 5 to 95 weight percent crystalline ethylene blocks (CEB) and 95 to 5 wt percent crystalline alpha-olefin blocks (CAOB). The block copolymers may include 10 wt % to 90 wt % CEB and 90 wt % to 10 wt % CAOB. The block copolymers may include 25 to 75 wt % CEB and 75 to 25 wt % CAOB, such as 30 to 70 wt % CEB and 70 to 30 wt % CAOB.

In some embodiments, the block composites of the invention have a Crystalline Block Composite Index (CBCI), may be greater than zero but less than 0.4 or from 0.1 to 0.3. In other embodiments, CBCI may be greater than 0.4 and up to 1.0. In some embodiments, the CBCI may be from 0.1 to 0.9, from 0.1 to 0.8, from 0.1 to 0.7 or from 0.1 to 0.6. Additionally, the CBCI may be from 0.4 to 0.7, from 0.5 to 0.7, or from 0.6 to 0.9. In some embodiments, CBCI may be from 0.3 to 0.9, from 0.3 to 0.8, or from 0.3 to 0.7, from 0.3 to 0.6, from 0.3 to 0.5, or from 0.3 to 0.4. In other embodiments, CBCI may be from 0.4 to 1.0, from 0.5 to 1.0, or from 0.6 to 1.0, from 0.7 to 1.0, from 0.8 to 1.0, or from 0.9 to 1.0. CBCI may be determined as described in U.S. Patent No 9,511,567 the entirety of which is hereby incorporated by reference.

The crystalline block composites may have a weight average molecular weight (Mw) of 1,000 to 2,500,000, 35000 to 1,000,000, 50,000 to 500,000, 50,000 to 300,000, or 50,000 to 200,000 g/mol. Appropriate techniques for determining Mw may include Gel Permeation Chromatography (GPC) techniques as described in U.S. Patent Application Publication Nos US2011-0082257, US2011-0082258 and US2011-0082249, all published on April 7, 2011 the entireties of which are hereby incorporated by reference.

The CBC resin(s) may have a CAOB amount of from 30 to 70 weight %, such as at least 40 wt %, at least 45 wt %, at least 50 wt %, and up to 60 wt %, such as up to 55 wt %. In some embodiments, the CBC resin(s) may have a (crystalline) block composite index of at least 0.1, such as at least 0.3, at least 0.5, or at least 0.7. The CBC resin(s) may have an MFR (230 °C/ 2.16 kg) in the range of from 1 to 50 dg/min, such as at least 2, at least 3, up to 40, such as to 30 g/min.

The CBCs may have heat of fusion values (reflecting the relatively higher ethylene content in the CEP and CEB) as measured by differential scanning calorimetry (DSC) of at least 85 Joules per gram (J/g), such as at least 90 J/g. The heat of fusion values for polymers of these types would generally have a maximum in the area of 125 J/g. DSC may be determined as described in U.S. Patent Application Publication Nos US2011-0082257, US2011-0082258 and US2011-0082249, all published on April 7, 2011 the entireties of which are hereby incorporated by reference.

The CBC may have a density of from 0.870 to 0.925 g/cm³, such as from 0.880 to 0.925 g/cm³, from 0.885 to 0.925 g/cm³, from 0.890 to 0.925 g/cm³, from 0.895 to 0.925 g/cm³, from 0.900 to 0.925 g/cm³, from 0.870 to 0.920 g/cm³, such as from 0.880 to 0.920 g/cm³, from 0.885 to 0.920 g/cm³, from 0.890 to 0.920 g/cm³, from 0.895 to 0.920 g/cm³, from 0.900 to 0.920 g/cm³, from 0.870 to 0.915 g/cm³, such as from 0.880 to 0.915 g/cm³, from 0.885 to 0.915 g/cm³, from 0.890 to 0.915 g/cm³, from 0.895 to 0.915 g/cm³, from 0.900 to 0.915 g/cm³, from 0.870 to 0.910 g/cm³, such as from 0.880 to 0.910 g/cm³, from 0.885 to 0.910 g/cm³, from 0.890 to 0.910 g/cm³, from 0.895 to 0.910 g/cm³, from 0.900 to 0.910 g/cm³.

In one or more embodiments, the first tie layer, the second tie layer, or both may include at least at least 50 wt.% CBC. In various embodiments, the first tie layer, the second tie layer, or both may include from 50 to 90 wt.%, from 55 to 90 wt.%, from 60 to 90 wt.%, from 65 to 90 wt.%, from 50 to 85 wt.%, from 55 to 85 wt.%, from 60 to 85 wt.%, from 65 to 85 wt.%, from 50 to 80 wt.%, from 55 to 80 wt.%, from 60 to 80 wt.%, from 65 to 80 wt.%, from 50 to 75 wt.%, from 55 to 75 wt.%, from 60 to 75 wt.%, from 65 to 75 wt.%, from 50 to 70 wt.%, from 55 to 70 wt.%, from 60 to 70 wt.%, or from 65 to 70 wt.% CBC.

Various compositions are considered suitable for the functionalized polyethylene. The functionalized polyethylene may be a polyethylene grafted with ethylenically unsubstituted dicarboxylic acid or derivative thereof. The ethylenically unsubstituted dicarboxylic acid or derivative thereof may be selected from maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof. In some embodiments, the functionalized polyethylene may be a functionalized single site catalyzed linear low density polyethylene. For example, the functionalized polyethylene may include maleic anhydride grafted single site catalyzed linear low density polyethylene.

The functionalized polyethylene may have a melt flow rate of from 1.0 to 10.0 dg/min as measured according to ASTM D-1238 (190 °C/ 2.16 kg). In embodiments, the functionalized polyethylene may have a melt flow rate of from 1.0 to 10.0 dg/min, from 1.0 to 8.0 dg/min, from 1.0 to 5.0 dg/min, from 2.0 to 10.0 dg/min, from 2.0 to 8.0 dg/min, from 2.0 to 5.0 dg/min, from 2.5 to 10.0 dg/min, from 2.5 to 8.0 dg/min, or from 2.5 to 5.0 dg/min. In further embodiments, the functionalized polyethylene may have a density from 0.900 to 0.940 g/cm³, from 0.900 to 0.935 g/cm³, from 0.900 to 0.930 g/cm³, from 0.900 to 0.925 g/cm³, from 0.900 to 0.924 g/cm³, from 0.900 to 0.920 g/cm³, from 0.900 to 0.918 g/cm³, from 0.902 to 0.940 g/cm³, from 0.902 to 0.935 g/cm³, from 0.902 to 0.930 g/cm³, from 0.902 to 0.925 g/cm³, from 0.902 to 0.924 g/cm³, from 0.902 to 0.920 g/cm³, or from 0.902 to 0.918 g/cm³.

In some embodiments, the functionalized polyethylene may be grafted with 0.1 to 3.0 wt.%, such as from 0.1 to 3.0 wt.%, from 0.5 to 3.0 wt.%, from 0.8 to 3.0 wt.%, from 0.1 to 2.5 wt.%, from 0.5 to 2.5 wt.%, 0.8 to 2.5 wt.%, from 0.1 to 2.0 wt.%, from 0.5 to 2.0 wt.%, from 0.8 to 2.0 wt.%, from 0.1 to 1.8 wt.%, from 0.5 to 1.8 wt.%, or from 0.8 to 1.8 wt.% ethylenically unsubstituted dicarboxylic acid or derivative thereof, for example, maleic anhydride.

In one or more embodiments, the first tie layer, the second tie layer, or both may include from 5 wt.% to 30 wt.% functionalized polyethylene. In one or more embodiments, the first tie layer, the second tie layer, or both may include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%, from 5 wt.% to 20 wt.%, from 8 wt.% to 20 wt.%, from 10 wt.% to 20 wt.%, or from 12 wt.% to 20 wt.% functionalized polyethylene.

Additionally, the first tie layer, the second tie layer, or both may include at least one of a polyolefin elastomer, an ethylene propylene diene terpolymer, or an olefin block copolymer.

Various compositions are considered suitable for the olefin block copolymer. In one or more embodiments, the olefin block copolymer may be an ethylene copolymer-based elastomer with a C₃ to C₂₀ hydrocarbon comonomer such as 1-butene, 1-hexene, or 1-octene. For example, the olefin block copolymer may include an ethylene/C₃-C₁₂-alpha-olefin copolymer.

The olefin block copolymer may have a melt flow rate of from 0.1 to 5.0 dg/min as determined according to ASTM D1238 (190 °C/ 2.16 kg). The olefin block copolymer may have a melt flow rate of from 0.1 to 5.0 dg/min, from 0.1 to 4.0 dg/min, from 0.1 to 3.0 dg/min, from 0.1 to 2.0 dg/min, from 0.1 to 1.5 dg/min, from 0.5 to 5.0 dg/min, from 0.5 to 4.0 dg/min, from 0.5 to 3.0 dg/min, from 0.5 to 2.0 dg/min, or from 0.5 to 1.5 dg/min. The olefin block copolymer may have a melting temperature of at least 115 °C, at least 116 °C, at least 117 °C, or at least 118 °C. The olefin block copolymer may have a density of from 0.860 to 0.900 g/cm³, such as from 0.860 to 0.900 g/cm³, from 0.860 to 0.895 g/cm³, from 0.860 to 0.890 g/cm³, from 0.860 to 0.885 g/cm³, from 0.860 to 0.880 g/cm³, 0.865 to 0.900 g/cm³, such as from 0.865 to 0.900 g/cm³, from 0.865 to 0.895 g/cm³, from 0.865 to 0.890 g/cm³, from 0.865 to 0.885 g/cm³, or from 0.865 to 0.880 g/cm³.

In one or more embodiments, polyolefin elastomers may be a homogeneously branched ethylene/alpha-olefin copolymer. These copolymers can be made with a single-site catalyst, including but not limited to metallocene catalyst or constrained geometry catalyst, and typically have a melting point of less than 105, preferably less than 90, more preferably less than 85, even more preferably less than 80 and still more preferably less than 75°C. The melting point is measured by differential scanning calorimetry (DSC) as described, for example, in USP 5,783,638. The alpha-olefin is preferably a C₃₋₂₀ linear, branched or cyclic alpha -olefin. Examples of C₃₋₂₀ alpha-olefins include propene, 1 butene, 4-methyl-1-pentene, 1-hexene, 1 octene, 1-decene, 1-dodecene, 1 tetradecene, 1 hexadecene, and 1-octadecene. The alpha olefins can also contain a cyclic structure such as cyclohexane or cyclopentane, resulting in an alpha -olefin such as 3 cyclohexyl-1-propene (allyl cyclohexane) and vinyl cyclohexane. Although not alpha olefins in the classical sense of the term, for purposes of this invention certain cyclic olefins, such as norbornene and related olefins, are alpha -olefins and can be used in place of some or all of the alpha olefins described above. Similarly, styrene and its related olefins (for example, alpha methylstyrene, etc.) are alpha-olefins for purposes of this invention. Illustrative homogeneously branched ethylene/alpha-olefin copolymers include ethylene/propylene, ethylene/butene, ethylene/1 hexene, ethylene/1 octene, ethylene/styrene, and the like. Illustrative terpolymers include ethylene/propylene/1-octene, ethylene/propylene/butene, ethylene/butene/1 octene, and ethylene/butene/styrene.

More specific examples of homogeneously branched ethylene/alpha-olefin interpolymers useful in this invention include homogeneously branched, linear ethylene/ alpha olefin copolymers (e.g. TAFMER^{®} by Mitsui Petrochemicals Company Limited and EXACT^{®} by Exxon Chemical Company), and the homogeneously branched, substantially linear ethylene/ alpha -olefin polymers (e.g., AFFINITY^{™} and ENGAGE^{™} polyethylene available from The Dow Chemical Company). The substantially linear ethylene copolymers are especially preferred, and are more fully described in USP 5,272,236, 5,278,272 and 5,986,028. Blends of any of these interpolymers can also be used in the practice of this invention.

In one or more embodiments, the ethylene propylene diene terpolymers may have a density of from 0.850 to 0.890 g/cm³, from 0.860 to 0.890 g/cm³, from 0.870 to 0.890 g/cm³, from 0.875 to 0.890 g/cm³, from 0.850 to 0.885 g/cm³, from 0.860 to 0.885 g/cm³, from 0.870 to 0.885 g/cm³, or from 0.875 to 0.885 g/cm³.

In one or more embodiments, the ethylene propylene diene terpolymers may have an ethylene content of from 50 to 90 wt.%, from 55 to 90 wt.%, from 60 to 90 wt.%, from 65 to 90 wt.%, from 50 to 85 wt.%, from 55 to 85 wt.%, from 60 to 85 wt.%, from 65 to 85 wt.%, from 50 to 80 wt.%, from 55 to 80 wt.%, 60 to 80 wt.%, 65 to 80 wt.%, from 50 to 75 wt.%, from 55 to 75 wt.%, from 60 to 75 wt.%, or from 65 to 75 wt.%.

In one or more embodiments, the ethylene propylene diene terpolymers may have an ethylidene norbornene (ENB) content of from 0.1 to 1.0 wt.%, from 0.2 to 1.0 wt.%, from 0.3 to 1.0 wt.%, from 0.4 to 1.0 wt.%, from 0.1 to 0.9 wt.%, from 0.2 to 0.9 wt.%, 0.3 to 0.9 wt.%, from 0.4 to 0.9 wt.%, from 0.1 to 0.8 wt.%, from 0.2 to 0.8 wt.%, from 0.3 to 0.8 wt.%, from 0.4 to 0.8 wt.%, from 0.1 to 0.7 wt.%, from 0.2 to 0.7 wt.%, from 0.3 to 0.7 wt.%, from 0.4 to 0.7 wt.%, from 0.1 to 0.6 wt.%, from 0.2 to 0.6 wt.%, from 0.3 to 0.6 wt.%, or from 0.4 to 0.6 wt.%.

In one or more embodiments, the ethylene propylene diene terpolymers may have a propylene content of from 10 to 50 wt.%, from 15 to 50 wt.%, from 20 to 50 wt.%, from 25 to 50 wt.%, from 10 to 50 wt.%, from 15 to 50 wt.%, from 20 to 50 wt.%, from 25 to 50 wt.%, from 10 to 45 wt.%, from 15 to 45 wt.%, from 20 to 45 wt.%, from 25 to 45 wt.%, from 10 to 45 wt.%, from 15 to 45 wt.%, from 20 to 45 wt.%, from 25 to 45 wt.%, from 10 to 40 wt.%, from 15 to 40 wt.%, from 20 to 40 wt.%, from 25 to 40 wt.%, from 10 to 40 wt.%, from 15 to 40 wt.%, from 20 to 40 wt.%, from 25 to 40 wt.%, from 10 to 35 wt.%, from 15 to 35 wt.%, from 20 to 35 wt.%, from 25 to 35 wt.%, from 10 to 35 wt.%, from 15 to 35 wt.%, from 20 to 35 wt.%, or from 25 to 35 wt.%.

In one or more embodiments, the first tie layer, the second tie layer, or both, may include from 5 wt.% to 30 wt.% of at least one of the polyolefin elastomer, the ethylene propylene diene terpolymer, or the olefin block copolymer. In one or more embodiments, the first tie layer, the second tie layer, or both may include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%, from 5 wt.% to 20 wt.%, from 8 wt.% to 20 wt.%, from 10 wt.% to 20 wt.%, or from 12 wt.% to 20 wt.% of at least one of the polyolefin elastomer, the ethylene propylene diene terpolymer, or the olefin block copolymer.

In one or more embodiments, the tie layer may have an anhydride content of from 0.08 to 0.35 wt.%, such as from 0.08 to 0.35 wt.%, from 0.10 to 0.35 wt.%, from 0.08 to 0.30 wt.%, from 0.10 to 0.30 wt.%, from 0.08 to 0.25 wt.%, or from 0.10 to 0.25 wt.%, based on the total weight of the tie layer.

In various embodiments, the first and second outer layers may include polypropylene.

In various embodiments, the polar polymer of the core layer may include polyamide, ethylene vinyl alcohol (EVOH), polyvinyl alcohol (PVOH), thermal plastic starch (TPS), thermoplastic polyurethane (TPU), or combinations thereof.

Without being bound by theory, it is believed that using a crystalline block composite (CBC) component, functionalized polyethylene having a density of 0.900 to 0.940 g/cm³ and a melt flow rate of 1.0 to 10.0 dg/min as determined according to ASTM D1238 (230 °C/ 2.16 kg), wherein the functionalized polyethylene comprises polyethylene grafted with ethylenically unsubstituted dicarboxylic acid or derivative thereof, and at least one of a polyolefin elastomer, an ethylene propylene diene terpolymer, or an olefin block copolymer may improve adhesion at higher temperatures compared to conventional tie layers. The olefin block copolymer may provide improved adhesion at temperatures greater than or equal to 100 °C, greater than or equal to 105 °C, greater than or equal to 110 °C, greater than or equal to 115 °C, or greater than or equal to 120 °C.

### ADDITIVES

It should be understood that any of the foregoing layers can further comprise one or more additives as known to those of skill in the art such as, for example, antioxidants, ultraviolet light stabilizers, thermal stabilizers, slip agents, antiblock agents, antistatic agents, pigments or colorants, processing aids, crosslinking catalysts, flame retardants, fillers and foaming agents. The layer may contain any amounts of such additives, such as from 0 wt. % to 10 wt. %, from 0 wt. % to 5 wt. %, from 0 wt. % to 1 wt. %, from 0 wt. % to 0.1 wt. %, from 0 wt. % to 0.001 wt. %, or any subset thereof, based on a weight of the layer.

### ARTICLES

The multilayer film may be constructed from two or more film layers by any film lamination and/or coextrusion technique and using any blown or cast film extrusion and lamination equipment known in the art. For example, multilayer film structures may be prepared using coextrusion techniques, such as, by cast coextrusion techniques.

In one or more embodiments, an article may be produced from the multilayer films described herein. The articles may include blown films, cast films, or laminates. The articles may include packing articles, such as retort packaging. The articles may also include pipes, sheets, and bottles.

Various thicknesses are consider suitable for the multilayer films of the present disclosure. The multilayer film may have a thickness of from 25-400 µm when it is a blow film or a cast film. The multilayer film may have a thickness of greater than or equal to 250 µm when it is a cast sheet.

### TEST METHODS

Melt flow rate was measured according to ASTM D1238 and/or ISO 1133, under selected conditions of temperature (T) and load (L), noted as MFR(T(°C)/L(kg)) and expressed in units of gram per 10 minutes or simplified to dg/min. Conditions used included (190 °C/2.16 kg), (230 °C/2.16 kg) and (160 °C/0.325 kg).

Mooney viscosity was measured following ASTM D1646 with conditions ML 1+4(125 °C).

The melting temperature (Tm) of different polymers was measured by differential scanning calorimetry (DSC) with a heat/ cool/ heat method, where the reported Tm was the peak temperature determined from the second heat based on ASTM D3418.

Density measurements were performed on test specimen from compression-molded plaques prepared according to ASTM D4703. Measurements were made within one hour of sample pressing, according to ASTM D792, Method B, within one hour of sample pressing.

Bonding strength was determined using an iodine test. The films were cut into 15 millimeter (mm) specimens along the machine direction and sealed with a 20% PP sealant layer at 150 °C and 1s dwell time. Specimen were peeled at 6 inch (15 cm)/ minute and the maximum force applied to initiate the peel displacement (i.e., peak load) was reported. The peeled interface was confirmed by applying a 2% tincture iodine solution on the peeled interface and wiping excess solution off with a cotton cloth, where the iodine will remain on the EVOH layer. The separated interface is the (tie - EVOH) interface of the 5-layer structure (20% PP - 5% tie -10% EVOH - 5% tie - 60% PP).

### EXAMPLES

The following Examples are offered by way of illustration and are presented in a manner such that one skilled in the art should recognize are not meant to be limiting to the present disclosure as a whole or to the appended claims.

The following compositions were used in the Examples below.

Braskem DS6D81, which is a random copolymer polypropylene commercially available from Braskem, has a melt flow rate (MFR) (230 °C/2.16 kg) of 5 dg/min and a melting temperature (Tm) of 134 °C.

Braskem DS6D20, which is a random copolymer polypropylene commercially available from Braskem, has an MFR (230 °C/ 2.16 kg) of 1.9 dg/min.

FP-1, which is a maleic anhydride grafted polypropylene has an MFR (160 °C/ 0.325 kg) of 12.5 dg/min, and 1.10 wt% grafted maleic anhydride. FP-1 was prepared according to Example 1 of U.S. Patent No 6228948. The entirety of U.S. Patent No 6228948 is hereby incorporated by reference.

FP-2, which is a maleic anhydride grafted HDPE has an (190 °C/ 2.16 kg) of 2.0 dg/min, and 1.35 wt% grafted maleic anhydride. FP-2 was prepared according to Example 1 of U.S. Patent No 4950541, the entirety of which is hereby incorporated by reference.

FP-3, which is a maleic anhydride grafted single-site catalyzed LLDPE, has an MFR (190 °C/ 2.16 kg) of 3.0 dg/min, and 1.15 wt% grafted maleic anhydride. FP-3 was prepared according to Example 2 of U.S. Patent No 4950541, the entirety of which is hereby incorporated by reference.

CBC-1, which is a crystalline block copolymer composite, MI, has an MFR (230 °C/ 2.16 kg) of 9.5 dg/min, and a density of 0.905 g/cm³. CBC-1 was prepared according to the protocol for CBC1 in U.S. Patent No. 10,526,436, the entirety of which is hereby incorporated by reference.

NORDEL^{™} 3745, which is an ethylene propylene diene terpolymer commercially available from The Dow Chemical Company, Midland, MI, has a Mooney viscosity, ML 1+5 AT 125 °C of 45 MU.

ENGAGE^{™} 8137, which is a polyolefin elastomer commercially available from The Dow Chemical Company, Midland, MI, has a melt flow rate of 13.0 dg/min (190 °C/ 2.16 kg), and a density of 0.864 g/cm³.

INFUSE^{™} 9817, which is an olefin block copolymer commercially available from The Dow Chemical Company, Midland, MI, has a melt flow rate of 15.0 dg/min (190 °C/ 2.16 kg), and a density of 0.877 g/cm³.

DFDB^{™} 9042, which is a very low density polyethylene commercially available from The Dow Chemical Company, Midland, MI, has a melt flow rate of 5.0 dg/min (190 °C/ 2.16 kg), and a density of 0.899 g/cm³.

### EXAMPLE 1

Example tie layers were prepared according to the formulations shown in Table 1. Various formulations of tie resins were compounded through a 42 mm diameter co-rotating, intermeshing twin-screw extruder. The extruder was configured with 12 barrels (48 L/D). The extruder was equipped with "loss-in-weight feeders". All the raw materials were fed through the main feed port. Nitrogen at 5 SCFH was used to purge first barrel section to maintain an inert atmosphere and minimize oxidation. A six-hole die and four-blades hub were used for underwater pelletization process. Cooling water temp is at 25 °C and water flow rate is at 45 GPM. A run rate of 200 lbs/hr and a screw speed of 250-275 rpm was used. Barrel 1 was water cooled, Barrels 2-3 were maintained at 50-150 °C, Barrels 4-12 were maintained at 180 °C.

**Table 1: Example Tie Layer Formulations**

| **Ingredient Type** | **SI Units** | **CE1** | **CE2** | **IE1** | **IE2** | **IE3** | **IE4** |
|---|---|---|---|---|---|---|---|
| Braskem DS6D81 | wt% | 57.5 | | | | | |
| CBC-1 | wt% | | 57.5 | 57.5 | 62.5 | 62.5 | 62.5 |
| FP-1 | wt% | 12.5 | | | | | |
| FP-2 | wt% | | 25 | | | | |
| FP-3 | wt% | | | 25 | 20 | 20 | 20 |
| NORDEL 3745 | wt% | 20 | | | | | |
| ENGAGE 8137 | wt% | | 17.5 | 17.5 | | | 17.5 |
| DFDB 9042 | wt% | | | | 17.5 | | |
| INFUSE 9817 | wt% | | | | | 17.5 | |
| Braskem DS6D20 | wt% | 10 | | | | | |

Cast films were produced on apilot scale coextrusion cast film line is used to produce the 5-layer film samples. Five 30:1 LID Egan Davis Standard MAC extruders were used, including 3 extruders with 2.5" diameters and 2 extruders with 2" diameter. 2 mil (50 microns) film with a layer ratio of (20% PP - 5% tie - 10% EVOH - 5% tie - 60% PP) produced, where resin is heated and extruded through a 5 layer dual plane feed block, a 36 inch T slot Cloeren die, and then cast on to the primary chill roll. The film is cooled and crystallized as it passes around the primary and secondary chill rolls before it reaches the winder. In route to the winder the thickness of the web is measured by an X-Ray device, data is fed to the control system and adjustments are made. The film is then wound onto a film core at the winder. The EVOH was SOARNOL DC3203F, which is a 32 mol% EVOH commercially available from Mitsubishi Chemical Group. The PP used for coextrusion is a 5 MFR Braskem DS6D21. Extrusion temperature set as 235 °C with 20 mils die gap and 1.4" air gap. All films were collected at 200 feet per minute line speed with a time-in-the-air-gap (TIAG) about 33 ms.

The 2 mil and 5-layer films of (20% PP - 5% tie -10% EVOH - 5% tie - 60% PP) were cut into 15mm specimen along the machine direction, sealed with 20% PP sealant layer at 150 °C and 1s dwell time. The peeled interface confirmed by applying 2% tincture iodine solution on peeled interface and wiping off with a cotton cloth, where the iodine will remain on the EVOH layer. The separated interface is the (tie - EVOH) interface of the 5-layer structure (20% PP - 5% tie -10% EVOH - 5% tie - 60% PP). The tests were conducted for each sample both immediately after production (referred to as "Green Bonding") and after one week. The results were as shown in Table 2.

**Table 2: Results of the Peel Test**

| **Properties** | **SI Units** | **CE1** | **CE2** | **IE1** | **IE2** | **IE3** | **IE4** |
|---|---|---|---|---|---|---|---|
| Total Maleic Anhydride | wt% | 0.15 | 0.34 | 0.29 | 0.23 | 0.23 | 0.23 |
| Average Peak Load (green) | g/15mm | 338 | 720 | 1320 | 1115 | 942 | 1149 |
| Avg-Peak Load (1-week) | g/15mm | 493 | 825 | 1388 | 1370 | 1155 | 1127 |

Example CE1, which was formulated with functionalized polypropylene and did not include a CBC had an adhesion of less than 500 g/15 mm, even after 1 week. Example CE2 was formulated with CBC and a functionalized polyethylene, but the functionalized polyethylene had a density of greater than 0.940 g/cm³. Example CE2 had a green bond adhesion of less than 800 grams/ 15mm, and 1-week bond <900 g/ 15mm.

Examples IE1-IE4 were formulated with single-site catalyzed LLDPE-graft, with less than 0.3 wt.% maleic anhydride to avoid over-reaction with EVOH or Nylon during co-extrusion. All of Examples IE1-IE4 had a green bond strength of greater than 900 g/ 15mm, and a 1-week aged bond strength of greater than 1,000 g/15mm. At a similar maleic anhydride level, Example IE1 delivered greater than 80% the higher adhesion of Example CE2. Additionally, Example IE3 also contained INFUSE 9817, (Tm = 120 °C), which is believed enhance heat resistance during heating for applications like retort packaging.

The subject matter of the present disclosure has been described in detail and by reference to specific embodiments. It should be understood that any detailed description of a component or feature of an embodiment does not necessarily imply that the component or feature is essential to the particular embodiment or to any other embodiment. Further, it should be apparent to those skilled in the art that various modifications and variations can be made to the described embodiments without departing from the spirit and scope of the claimed subject matter.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" a second component, it is contemplated that, in embodiments, the first component "consists" or "consists essentially of" that second component. It should further be understood that where a first component is described as "comprising" a second component, it is contemplated that, in embodiments, the first component comprises at least 10%, at least 20%, at least 30%, at least 40%, at least 50%, at least 60%, at least 70%, at least 80%, at least 90%, at least 95%, or even at least 99% that second component (where % can be weight % or molar %).

It is also noted that recitations herein of "at least one" component, element, etc., should not be used to create an inference that the alternative use of the articles "a" or "an" should be limited to a single component, element, etc.

## Claims

1. A multilayer film comprising first and second outer layers comprising polypropylene, a core layer comprising at least one polar polymer disposed between the first outer layer and the second outer layer, a first tie layer disposed between the first outer layer and the core layer, and a second tie layer disposed between the second outer layer and the core layer, wherein the first tie layer, the second tie layer, or both comprise:
a crystalline block composite (CBC) component comprising:
i) an ethylene polymer (EP) comprising at least 90 mol % polymerized ethylene by weight of the ethylene polymer;
ii) an alpha-olefin-based crystalline polymer (CAOP) and
iii) a block copolymer comprising
(a) an ethylene polymer block comprising at least 90 mol % polymerized ethylene by weight of the ethylene polymer block and
(b) a crystalline alpha-olefin block (CAOB);
functionalized polyethylene having a density of 0.900 to 0.940 g/cm³ and a melt flow rate of 1.0 to 10.0 dg/min as determined according to ASTM D1238 (190 °C/ 2.16 kg), wherein the functionalized polyethylene comprises polyethylene grafted with ethylenically unsubstituted dicarboxylic acid or derivative thereof; and
at least one of a polyolefin elastomer, an ethylene propylene diene terpolymer, or an olefin block copolymer.

2. The multilayer film of claim 1, wherein the functionalized polyethylene comprises linear low density polyethylene having a density of 0.902 to 0.924 g/cm³ and a melt flow rate of 2.0 to 8.0 dg/min as determined according to ASTM D1238 (190 °C/ 2.16 kg).

3. The multilayer film of claim 1 or 2, wherein the functionalized polyethylene is grafted with 0.1 to 3 wt.% of ethylenically unsubstituted dicarboxylic acid or derivative thereof.

4. The multilayer film of any one of claims 1 to 3, wherein the ethylenically unsubstituted dicarboxylic acid or derivative thereof is selected from the group consisting of maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof.

5. The multilayer film of any one of claims 1 to 4, wherein the ethylenically unsubstituted dicarboxylic acid or derivative thereof comprises maleic anhydride.

6. The multilayer film of any one of claims 1 to 5, wherein the first tie layer, the second tie layer or both comprise the olefin block copolymer, the olefin block copolymer having an ethylene/C₃-C₁₂-alpha-olefin copolymer comprising a density of 0.860 to 0.900 g/cm³, and a melting temperature of at least 115 °C.

7. The multilayer film of claim 6, wherein the olefin block copolymer has a melt flow rate of 10.0 to 25.0 dg/min as determined according to ASTM D1238 (190 °C/ 2.16 kg).

8. The multilayer film of any one of claims 1 to 7, wherein the polar polymer of the core layer comprises polyamide, EVOH, PVOH, TPS, TPU, or combinations thereof.

9. The multilayer film of any one of claims 1 to 8, wherein the CBC comprises a density of 0.870 to 0.925 g/cm³, and an MFR (230 °C/ 2.16 kg) of 5.0 to 50.0 dg/min as determined according to ASTM D1238.

10. The multilayer film of any one of claims 1 to 9, wherein the first tie layer, the second tie layer, or both comprise at least 50 wt.% CBC.

11. The multilayer film of any one of claims 1 to 10, wherein the first tie layer, the second tie layer, or both comprise:
from 50 to 90 wt.% CBC;
from 5 to 30 wt.% functionalized polyethylene; and
from 5 to 30 wt.% of at least one of the polyolefin elastomer, the ethylene propylene diene terpolymer, or the olefin block copolymer.

12. An article comprising the multilayer film of any one of claims 1 to 11.

13. The article of claim 12, wherein the article comprises packaging articles.

14. The article of claim 12, wherein the article is a cast film, blown film, or laminate.

15. A formulation comprising:
a crystalline block composite (CBC) component comprising:
i) an ethylene polymer (EP) comprising at least 90 mol % polymerized ethylene by weight of the ethylene polymer;
ii) an alpha-olefin-based crystalline polymer (CAOP) and
iii) a block copolymer comprising
(a) an ethylene polymer block comprising at least 90 mol % polymerized ethylene by weight of the ethylene polymer block and
(b) a crystalline alpha-olefin block (CAOB);
functionalized polyethylene having 0.900 to 0.940 g/cm³ and a melt flow rate of 1.0 to 10.0 dg/min as determined according to ASTM D1238 (190 °C/ 2.16 kg), wherein the functionalized polyethylene comprises polyethylene grafted with ethylenically unsubstituted dicarboxylic acid or derivative thereof; and
at least one of a polyolefin elastomer, an ethylene propylene diene terpolymer, or an olefin block copolymer.
